# EUROPEAN PATENT SPECIFICATION

(11) **EP 3 364 760 B1**
(45) Date of publication and mention of the grant of the patent: **01.12.2021**
(21) Application number: 16794757.1
(22) Date of filing: 20.10.2016
(51) Int. Cl.: A01N 43/707, A01N 43/40, A01P 13/02

(54) **USE OF A MIXTURE OF HERBICIDES ON POTATOES**
VERWENDUNG EINER MISCHUNG VON HERBIZIDEN AUF KARTOFFELN
UTILISATION D'UN MÉLANGE D'HERBICIDES SUR POMMES DE TERRE

(30) Priority: 22.10.2015 US 201562244832 P
(43) Date of publication of application: 29.08.2018
(73) Proprietor: Adama Agan Ltd., 7710201 Ashdod (IL)
(72) Inventor: HILL, Stuart, Newmarket Suffolk CB8 8RD (GB)
(74) Representative: ZBM Patents - Zea, Barlocci & Markvardsen
(86) International application number: PCT/IL2016/051138
(87) International publication number: WO 2017/068587

(56) References cited:
- WO-A1-2014/001361
- US-A1- 2011 152 091
- H. S. Dhammu: "INTERACTION OF BROWN LEAF SPOT WITH POST-EMERGENT HERBICIDES IN NARROW LEAFED LUPINS", Proceedings 12th International Lupin Association, 18 September 2008 (2008-09-18), pages 55-57, XP055325226, ISBN: 978-0-86476-153-8 Retrieved from the Internet: URL:http://www.lupins.org/pdf/conference/2 008/Agronomy and Production/HS Dhammu W MacLeod C Roberts P Payne and M DAntuono.pdf [retrieved on 2016-12-01]

## Description

### TECHNICAL FIELD

The present subject matter relates to a method of controlling or preventing unwanted vegetation in a crop of potatoes and reducing the amount of herbicidally active components necessary for controlling or preventing unwanted vegetation.

### BACKGROUND OF THE PRESENT SUBJECT MATTER

The control of undesired vegetation is extremely important in order to achieve high crop efficiency. In many cases, while herbicides have an effect against a spectrum of weeds, they do not however fight a certain type of other weeds, which is also present in the crop cultures to be protected. Therefore, there is a strong need for mixing two or more herbicides.

Mixtures of selected herbicides have several advantages over the use of a single herbicide including (a) an increase in the spectrum of weeds controlled or an extension of weed control over a longer period of time, (b) an improvement in crop safety by using minimum doses of selected herbicides applied in combination rather than a single high dose of one herbicide, and (c) a delay in the appearance of resistant weed species to selected herbicides (Int. J. Agri. Biol., Vol. 6, No. 1, 2004, pages 209-212).

However, the activity and selectivity behavior of any specific mixture is difficult to predict since the behavior of each single herbicide in the mixture is often affected by the presence of the other(s) and the activity of the mixture may also vary considerably depending on chemical character, plant species, growth stage, and environmental conditions. This practice may result in reduced activity of the herbicides in the mixture.

As is known in the art, the use of diflufenican in potato crop to control undesired vegetation causes phytotoxicity on the potato plant. Phytotoxic effects can range from slight burning or browning of leaves to death of the plant. The damage may appear as distorted leaves, fruit, flowers or stems. Phytotoxic symptoms vary with the pesticide and the type of plant that has been affected.

Diflufenican was first described by M. C. C. Ramp et al. (Proc. Br. Crop Prot. Conf. - Weeds, 1985, 1, 23). Diflufenican (*N*-(2,4-difluorophenyl)-2-[3-(trifluoromethyl)phenoxy]-3-pyridinecarboxamide) further disclosed in EP 53011 is a carotenoid biosynthesis inhibitor which acts by the inhibition of phytoene desaturase. It is a selective contact and residual herbicide, which is principally absorbed by the shoots of germinating seedlings, with limited translocation. Diflufenican is used for pre- or early post-emergence in autumn-sown wheat and barley, to control grass and broad-leaved weeds. The recommended application rate for diflufenican on wheat and barley is a maximum of 187.5 g/ha.

Metribuzin (4-amino-6-(1,1-dimethylethyl)-3-(methylthio)-1,2,4-triazin-5(4*H*)-one) disclosed in BE 697083, DE 1795784 and US 3905801 is a is a triazinone herbicide that inhibits photosynthesis in a plant by binding to a protein of the photosystem II complex resulting in a loss of chlorophyll and plant pigments followed by plant cell drying and disintegration. It is a selective systemic herbicide absorbed predominantly by the roots, but also by the leaves. Metribuzin is used for pre- and post-emergence control of many grasses and broad-leaved weeds in soya beans, potatoes, tomatoes, sugar cane, alfalfa, asparagus, maize and cereals. The recommended application rate for metribuzin on potatoes ranges from 350-525 g/ha.

WO 2014/001361 describes herbicidal agents comprising an effective amount of A) flufenacet, B) aclonifen, C) Diflufenican and D) metribuzin. US patent application publication No. 2011/152091 describes a herbicidal composition comprising an effective amount of A) flufenacet, B) diflufenican, and C) metribuzin.

Based on the aspects discussed above, there is a need in the art for a new low dosage herbicidal composition comprising a combination of diflufenican and metribuzin for use on potatoes that can control a wide spectrum of weeds wherein the phytotoxic effect is minimal or non-existent and does not have affect on the yield of the potatoes.

### SUMMARY

According to one aspect, the present subject matter relates to the use of a herbicidally active combination comprising, as the only crop protection agents and/or herbicides, diflufenican and metribuzin or an ester or salt of any of the foregoing, or a combination thereof for controlling unwanted vegetation in a crop of potatoes.

According to a further aspect, the present subject matter provides a method of reducing the total amount of herbicidally active compounds necessary for controlling unwanted vegetation in a crop of potatoes. The method comprises: a) applying metribuzin or an ester or salt or a combination thereof at an application rate from about 25% to about 75% of a recommended application rate of from between 350 and 525 g/ha; and b) applying diflufenican or an ester or salt or a combination thereof, wherein said metribuzin or an ester or salt or a combination thereof and said diflufenican or an ester or salt or a combination thereof are the only crop protection agents and/or herbicides used for said controlling.

### DETAILED DESCRIPTION

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein, the phrase "agriculturally acceptable carrier" means carriers which are known and accepted in the art for the formation of formulations for agricultural or horticultural use.

As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits. In yet another embodiment, the term "plant" may include the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

As used herein, the term "locus" includes not only areas where weeds may already be growing, but also areas where weeds have yet to emerge, and also to areas under cultivation.

As used herein, the term "post-emergence," refers to the application of the herbicide composition to the weeds that have emerged from the soil. The term "pre-emergence" refers to the application of the herbicide composition to a habitat, a weed, or soil, prior to the emergence of the weeds from the soil.

As used herein, the term "control of undesirable vegetation" refers to the interference with the normal growth and development of undesired vegetation. Examples of control activity include, but are not limited to, inhibition of root growth, inhibition of shoot growth, inhibition of shoot emergence, inhibition of seed production, or reduction of weed biomass.

As used herein, the term "effective amount" refers to an amount of the compound that, when ingested, contacted with or sensed, is sufficient to achieve a good level of control.

As used herein, the term "mixture" or "combination" refers, but is not limited to, a combination in any physical form, e.g., blend, solution, or alloy.

The term "plant health" comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

The term "a" or "an" as used herein includes the singular and the plural, *unless specifically stated* otherwise. Therefore, the terms "a," "an" or "at least one" can be used interchangeably in this application.

Throughout the application, descriptions of various embodiments use the term "comprising"; however, it will be understood by one of skill in the art, that in some specific instances, an embodiment can alternatively be described using the language "consisting essentially of" or "consisting of."

### Herbicidal Mixture

It has been found that preventing or controlling unwanted vegetation in a crop of potatoes may be accomplished by applying to the locus of the unwanted vegetation a herbicidally active combination of diflufenican and metribuzin. The combination provides a greater spectrum of weed control than that envisaged on the basis of the individual herbicides found therein. Such a combination allows for a reduced dosage of the individual herbicides which can be phytotoxic, damage or reduce the yield of crops such as potatoes.

In one embodiment, the present subject matter relates to the use of a herbicidally active combination of diflufenican and metribuzin for controlling unwanted vegetation in a crop of potatoes.

In one embodiment, the weight ratio of diflufenican to the metribuzin in the mixture is from 1:30 to 30:1. In another embodiment, the weight ratio of diflufenican to metribuzin is from 1:10 to 10:1. In yet another embodiment, the weight ratio of diflufenican to metribuzin is from 1:5 to 5:1. In a specific embodiment, the weight ratio of diflufenican to metribuzin is from 1:4 to 4:1.

The herbicidally effective application rates of the herbicidal mixture cannot generally be defined, as it varies depending upon various conditions such as the type of the formulation, weather conditions, the type of crop and the type of weeds.

The application rates of the combination may vary depending on the desired effect. In an embodiment, depending on the desired effect, the application rates of the combination according to the present subject matter may be from approximately 1g/ha to approximately 1000 g/ha, particularly, from approximately 150 g/ha to approximately 650 g/ha. In an another embodiment, the application rates of the combination according to the present subject matter may be from approximately 250g/ha to approximately 500 g/ha. The optimal rate for a specific application of the mixture will depend on the crop and may be readily determined by established biological tests known to those skilled in the art.

In a specific embodiment, the mixture of diflufenican and metribuzin may be applied to the locus of the undesired vegetation in an amount of approximately 250 g/ha to approximately 500 g/ha. In yet another specific embodiment, the mixture of the mixture of diflufenican and metribuzin may be applied at a rate of approximately 375g/ha. Correspondingly, the amount of diflufenican may be between approximately 50 g/ha to approximately 100 g/ha, and the amount of metribuzin may be between approximately 200 to approximately 400 g/ha. In a specific embodiment, the amount of diflufenican may be approximately 75 g/ha, and the amount of metribuzin may be approximately 300 g/ha.

In an embodiment, the herbicidal mixture may be applied to the locus of the unwanted vegetation in an amount or a rate of application of from approximately 0.01 L/ha to approximately 100 L/ha. In another embodiment, the application rate may be from approximately 0.1 L/ha to approximately 10 L/ha. In an embodiment, the application rate may be from approximately 0.8 L/ha to approximately 1.6 L/ha. In a specific embodiment, the mixture applied at a rate of 1.2 L/ha.

In a further embodiment, the mixture is applied to the locus of undesired vegetation in an amount of 0.1 liter/ha. In a specific embodiment, the mixture is applied in an amount of 0.25 liter/ha. In still another specific embodiment, the mixture is applied in an amount of 0.5 liter/ha. In still yet another specific embodiment, the mixture is applied in an amount of 0.75 liter/ha. In a further specific embodiment, the mixture is applied in an amount of 2 liter/ha. In yet another specific embodiment, the mixture is applied in an amount of 1 liter/ha.

The present subject matter further relates to a method of reducing the total amount of herbicidally active compounds necessary for controlling unwanted vegetation in a crop of potatoes by a) applying metribuzin at an application rate from about 25% to about 75% of the recommended application rate of from 350 to 525 g/ha; and b) applying diflufenican.

The present disclosure relates to a herbicidal composition comprising a herbicidal active combination of diflufenican and metribuzin or an ester or salt of any of the foregoing, and/or a combination thereof for use in controlling unwanted vegetation in a crop of potatoes. The composition may further include an agriculturally acceptable carrier.

The present disclosure relates to a herbicidal composition comprising an herbicidal active combination of diflufenican and metribuzin or an ester or salt of any of the foregoing, and/or a combination thereof and an agriculturally acceptable carrier.

The composition may include at least one additional component selected from the group of surfactants, solid diluents, liquid diluents and other additives.

According to the present disclosure, the composition may include additional crop protection agents, for example for example insecticides, herbicides, fungicides, bactericides, nematicides, molluscicides, growth regulators, biological agents, fertilizers, or mixtures thereof. However, for the avoidance of doubt it is understood that such additional crop protection agents are unnecessary to achieve the desired control of undesired vegetation as achieved by the present combinations. Accordingly, the herbicidal compositions and herbicidal mixtures may be limited to containing diflufenican and metribuzin as the only crop protection agents and/or herbicides present.

According to the present disclosure, the mixture and formulations described herein may be applied in conjunction with one or more co-herbicides to control a wider variety of undesirable vegetation. When used in conjunction with co-herbicides, the composition can be formulated with the co-herbicide or co-herbicides, tank mixed with the co-herbicide or co-herbicides or applied sequentially with the co-herbicide or co-herbicides. Some of the co-herbicides that can be employed in conjunction with the mixture of the present subject matter include but are not limited to 4-CPA; 4-CPB; 4-CPP; 2,4-D; 2,4-D choline salt, 2,4-D esters and amines, 2,4-DB; 3,4-DA; 3,4-DB; 2,4-DEB; 2,4-DEP; 3,4-DP; 2,3,6-TBA; 2,4,5-T; 2,4,5-TB; acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfuresate, bensulfuron-methyl, bensulide, benthiocarb, bentazon-sodium, benzadox, benzfendizone, benzipram, benzobicyclon, benzofenap, benzofluor, benzoylprop, benzthiazuron, bialaphos, bicyclopyrone, bifenox, bilanafos, bispyribac-sodium, borax, bromacil, bromobonil, bromobutide, bromofenoxim, bromoxynil, brompyrazon, butachlor, butafenacil, butenachlor, buthidazole, buthiuron, butroxydim, buturon, butylate, cacodylic acid, cafenstrole, calcium chlorate, calcium cyanamide, cambendichlor, carbasulam, carboxazole chlorprocarb, carfentrazone-ethyl, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorsulfuron, chlorthal, chlorthiamid, cinidon-ethyl, cinmethylin, cinosulfuron, cisanilide, clethodim, cliodinate, clodinafop-propargyl, clofop, clomazone, clomeprop, cloprop, cloproxydim, clopyralid, cloransulam-methyl, CMA, copper sulfate, CPMF, CPPC, credazine, cresol, cumyluron, cyanatryn, cyanazine, cycloate, cyclopyrimorate, cyclosulfamuron, cycloxydim, cycluron, cyhalofop-butyl, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenzopyr, dimefuron, dimepiperate, dimethachlor, dimethametryn, dimexano, dimidazon, dinofenate, dinoprop, dinosam, dinoseb, dinoterb, diphenamid, dipropetryn, diquat, disuldiuron, DMPA, DNOC, DSMA, EBEP, eglinazine, endothal, epronaz, EPTC, erbon, esprocarb, ethbenzamide, ethametsulfuron, ethidimuron, ethiolate, ethobenzamid, etobenzamid, ethofumesate, ethoxyfen, ethoxysulfuron, etinofen, etnipromid, etobenzanid, EXD, fenasulam, fenoprop, fenoxaprop, fenoxaprop-P-ethyl, fenoxaprop-P-ethyl+isoxadifen-ethyl, fenoxasulfone, fenteracol, fenthiaprop, fentrazamide, fenuron, ferrous sulfate, flamprop, flamprop-M, flazasulfuron, florasulam, fluazifop, fluazifop-P-butyl, fluazolate, flucarbazone, flucetosulfuron, fluchloralin, flufenacet, flufenican, flufenpyr-ethyl, flumetsulam, flumezin, flumiclorac-pentyl, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, fluorochloridone, fluoroxypyr, fluoroxypyr-meptyl, flurtamone, fluthiacet, fomesafen, foramsulfuron, fosamine, fumiclorac, furyloxyfen, glufosinate, glufosinate salts and esters, glufosinate-ammonium, glufosinate-P-ammonium, glyphosate, glyphosate salts and esters, halauxifen, halauxifen-methyl, halosafen, halosulfuron-methyl, haloxydine, haloxyfop-methyl, haloxyfop-P-methyl, hexachloroacetone, hexaflurate, hexazinone, imazamethabenz, imazamox, imazapic, imazapyr, imazaquin, imazosulfuron, imazethapyr, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metsulfuron, metsulfuron-methyl, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, ortho-dichlorobenzene, orthosulfamuron, oxadiargyl, oxadiazon, oxapyrazon, oxasulfuron, oxaziclomefone, oxyfluorfen, paraflufen-ethyl, parafluoron, paraquat, pebulate, pelargonic acidpenoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron-methyl, procyazine, prodiamine, profluazol, profluralin, profoxydim, proglinazine, prohexadione-calcium, prometon, prometryn, pronamide, propachlor, propanil, propaquizafop, propazine, propisochlor, propoxycarbazone, propyrisulfuron, propyzamide, prosulfalin, prosulfocarb, prosulfuron, proxan, prynachlor, pydanon, pyraclonil, pyraflufen-ethyl, pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, quizalofop, quizalofop-P-ethyl, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, SYN-523, TCA, tebutam, tebuthiuron, tefuryltrione, tembotrione, tepraloxydim, terbacil, terbucarb, terbuchlor, terbumeton, terbuthylazine, terbutryn, tetrafluoron, thiazafluoronthidiazimin, thidiazuron, thiencarbazone-methyl, thifensulfuron, thifensulfurn-methyl, thiobencarb, tiocarbazil, tioclorim, topramezone, tralkoxydim, triafamone, tri-allate, triasulfuron, triaziflam, tribenuron, tribenuron-methyl, tricamba, triclopyr choline salt, triclopyr esters and salts, tridiphane, trietazine, trifloxysulfuron, trifluralin, triflusulfuron, trifop, trifopsime, trihydroxytriazine, trimeturon, tripropindan, tritac tritosulfuron, vernolate, xylachlor and salts, esters, optically active isomers and mixtures thereof.

The present composition can be made at the time of use, or diluted. The present compositions can also be concentrated compositions, or so-called "ready-to-use" compositions, that is to say, compositions ready for use. Alternatively, the present compositions may be applied in a combined spray mixture composed from separate formulations of the single active ingredients, such as a "tank-mix" form.

The present composition may be employed or prepared in any conventional form, for example, in the form of a twin pack, or for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

Such compositions can be formulated using agriculturally acceptable carriers, surfactants or other application-promoting adjuvants customarily employed in formulation technology and formulation techniques that are known in the art.

In an embodiment, the amount of the mixture of active ingredients in the composition is about 0.1-99 wt. %, about 0.1-95 wt. %, or about 0.1-90 wt. %, based on the total weight of the composition. In another embodiment, the amount of the mixture of active ingredients in the composition is about 20-40 wt %, based on the total weight of the composition. In yet another embodiment, the amount of the mixture of active ingredients in the composition is from about 0.1%, 0.5%, 1%, 1.5%, 2%, 2.5%, 3%, 3.5%, 4%, 4.5%, 5% to about 90%, 93%, 95%, 98%, 99% based on the total weight of the composition.

In a specific embodiment, the amount of the mixture of active ingredients in the composition is about 30 wt %, based on the total weight of the composition.

The present composition may include (i) active ingredients in an amount of approximately 20-40 wt %; (ii) surfactants in an amount of approximately 1-6 wt %; (iii) propylene glycol, as a solvent, in an amount of approximately 2-10 wt %; (iv) other additives in an amount of approximately < 1 wt %; and (v) liquid carrier in an amount of approximately 50-70 wt %.

Examples of suitable liquid carriers potentially useful in the present compositions include but are not limited to water; aromatic hydrocarbons such as alkylbenzenes and alkylnaphthalenes; alcohols such as cyclohexanol, and decanol; ethylene glycol; polypropylene glycol; dipropropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Surfactants may refer to any agriculturally acceptable material which imparts emulsifiability, stability, spreading, wetting, dispersibility, or other surface-modifying properties. Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, solvent or oil, which are suitable for dilution with water.

The mixtures and the herbicidal compositions may be applied pre-emergence.

As used in the present methods, the herbicidal compositions and herbicidal mixtures discussed herein may be applied jointly or in a succession. That is, each of diflufenican and metribuzin may be applied jointly or in succession. In one example, diflufenican and metribuzin are prepared separately, and the individual formulations are applied as is, or diluted to predetermined concentrations. In a further example, diflufenican and metribuzin are prepared separately, and the formulations are mixed when diluted to a predetermined concentration. In another example, diflufenican and metribuzin are formulated together, and the formulation is applied as it is, or the formulation is diluted to a predetermined concentration.

According to an embodiment, the undesired vegetation may include one or more of Alfalfa (*Medicago sativa*), Amsinckia (*Amsinckia* spp.), Capeweed (*Arctotheca calendula*), Charlock (wild mustard, *Sinapis arvensis*), Chickweed (*Stellaria media*), Corn gromwell (sheepweed, white ironweed) (*Buglossoides arvensis*), Common couchgrass *(Agropyron repens*), Corn mint *(Mentha arvensis*), Crassula (*Crassula* spp.), Creeping thistle *(Cirsium arvense),* False bindweed (*Calystegia sepium),* False mayweed (*Tripleurospermum maritimum),* Field bindweed *(Convolvulus arvensis*), Fool's parsley (*Aethusa cynapium),* Gallant soldier (*Galinsoga parviflora*), Henbit deadnettle *(Lamium amplexicaule*), Hedge mustard *(Sisymbrium officinale),* Hyssop loosestrife *(Lythrum hyssopifolia*), Indian hedge mustard *(Sisymbrium orientale),* Italian rye-grass *(Lolium multiflorum),* Marshmallow (*Malva parviflora*), Sticky mouse-eared chickweed (*Cerastium glomeratum),* Night-scented stock (*Matthiola longipetala*), Paterson's curse (Salvation Jane) *(Echium plantagineum*), Pheasant's eye (*Adonis microcarpa*), Pineapple weed *(Matricaria discoidea*), Poinsettia (*Euphorbia pulcherrima*), Prickly lettuce *(Lactuca serriola*), Purple deadnettle (*Lamium purpureum*), Rough poppy *(Papaver hybridum),* Shepherd's purse (*Capsella bursa-pastoris),* Skeletonweed (*Chondrilla juncea),* Sorrel *(Rumex acetosella*), Ivy-leaved Speedwell (*Veronica hederifolia*), Dwarf nettle (Stinging nettle) (*Urtica urens*), Toad rush *(Juncus bufonius),* Turnipweed *(Rapistrum rugosum),* Wild radish *(Raphanus raphanistrum*), Wild turnip *(Brassica tournefortii*), Knotgrass *(Polygonum aviculare*), Annual mercury (*Mercurialis annua*), False castor oil (thornapples) (*Daturaferox*), Ball mustard (*Neslia paniculata*), Barnyard grass (*Echinochloa crusgalli*), *Beta vulgaris,* Black Bindweed (*Fallopia convolvulus),* Blackgrass *(Alopecurus myosuroides),* Black pigweed (*Trianthema portulacastrum*), Buchan weed (*Hirschfeldia incana*), Bull's head *(Tribulus terrestris*), Buttonweed *(Abutilon theophrasti*), Catsear *(Hypochaeris radicata*), Cleavers *(Galium aparine*), Common bugloss (*Anthusa arvensis*), Common borage (*Boragio officinales),* Common cotula (*Cotula australis),* Common groundsel *(Senecio vulgaris*), Common hempnettle *(Galeopsis tetrahit),* Common nettle (*Urtica dioica*), Corn spurry (*Spergula arvensis*), Creeping speedwell (*Veronica filiformis*), Crown beard (dogweed) (*Verbesina encelioides),* Crowsfoot grass *(Eleusine indica),* Dock *(Rumex* spp.), Doublegee *(Emex australis*), Fat hen (*Atriplex prostrata*), Field madder (*Sherardia arvensis*), Field Pansy (*Viola arvensis*), Field oennycress (*Thlaspi arvense),* Fog grass *(Holcus lanatus*), Fumitory (*Fumaria* spp.), *Fumaria officinalis,* Geranium *(Geranium* spp.), *Geranium dissectum,* Great brome *(Bromus diandrus*), Greater plantain *(Plantago major),* Green summer grass (*Digitaria ciliaris*), Hare's ear (treacle mustard) *(Conringia orientalis),* Heliotrope (*Heliotropium* spp.), Hempnettle *(Galeopsis sp.),* Horehound *(Marrubium vulgare),* Indian hedge mustard *(Sisymbrium orientale),* Lesser swinecress *(Coronopus didymus*), *Matricaria* spp., Scented mayweed (*Matricaria recutita*), Scentless mayweed *(Matricaria inodora*), Mountain sorrel (purple calandrinia) (*Calandrinia ciliata*), Mustard, Nettle, *Urtica* spp., Nightshade (*Solanum nigrum),* Pale persicaria (*Persicaria lapathifolia*), Perennial sowthistle *(Sonchus arvensis*), Persian speedwell (*Veronica persica*), *Chenopodium* sp., Pigweed *(Chenopodium album*), Powell's amaranth *(Amaranthus powellii),* Red hempnettle (*Galeopsis intermedia),* Redshank (*Persicaria maculosa*), Redroot pigweed *(Amaranthus retroflexus*), Scarlet pimpernel (*Anagallis arvensis*), Scrub nettle (stinging nettle) (*Urtica incisa*), Annual sowthistle *(Sonchus oleraceus),* Spiny emex (Three cornered jack) (*Emex australis),* Spreading orache (*Atriplex patula*), Stagger weed *(Stachys arvensis*), Storksbill (*Erodium cicutarium),* Summer grass, Sun spurge (*Euphorbia helioscopia*), Toad rush *(Juncus bufonius),* Black bindweed *(Polygonum convolvulus), Polygonum* spp., Wild Pansy *(Viola tricolor),* Winter grass (annual meadow grass) (*Poa Annua*), Wild oat (*Avenafatua*), Winter rape *(Brassica napus)* and Yellow burrweed (*Amsinckia calycina*).

In a further embodiment, the undesired vegetation may include one or more of *Abutilon theophrasti, Aethusa cynapium, Agropyron repens, Alopecurus myosuroides, Amaranthus retroflexus, Anthusa arvensis, Atriplex patula, Atriplex prostrata, Avena fatua, Beta vulgaris, Boragio officinales, Brassica napus, Calystegia sepium, Capsella bursa-pastoris, Chenopodium* sp., *Chenopodium album, Cirsium arvense, Convolvulus arvensis, Echinochloa crusgalli, Fallopia convolvulus, Fumaria officinalis, Galeopsis intermedia, Galeopsis sp., Galinsoga parviflora, Galium aparine, Geranium dissectum, Lamium purpureum, Lolium multiflorum, Matricaria* spp., *Matricaria recutita, Matricaria inodora, Medicago sativa, Mercurialis annua, Persicaria lapathifolia, Persicaria maculosa, Plantago major, Poa Annua, Polygonum convolvulus, Polygonum* spp., *Polygonum aviculare, Raphanus raphanistrum, Senecio vulgaris, Sinapis arvensis, Solanum nigrum, Sonchus arvensis, Sonchus oleraceus, Stellaria media, Thlaspi arvense, Urtica urens, Urtica dioica, Veronica persica, Veronica hederifolia, Viola arvensis* and *Viola tricolor.*

The present disclosure also relates to a kit comprising the herbicidal mixture as described herein, or components thereof. Such kits may comprise, in addition to the aforementioned active components, one or more additional inactive ingredients, either within the provided herbicidal composition or separately. Certain kits comprise diflufenican and metribuzin, or an ester or salt of any of the foregoing, and/or a combination thereof, each in a separate container, and each optionally combined with a carrier.

### EXPERIMENTAL DETAILS

Three herbicide treatments were compared:
a) Diflufenican 62.5 g a.i/ha + Metribuzin 250 g a.i/ha SC;
b) Diflufenican 500 g a.i/ha SC;
c) Metribuzin 700 g a.i/ha WG.

This trial was performed on a crop of potatoes in order to evaluate the efficacy of the above listed herbicides on numerous weed. The trials were performed in central and southern Europe.

The experiments were conducted on 3m X 7m plots in a completely randomized design. Each treatment was replicated 3 times. The herbicides were applied with a motorized sprayer operating at a pressure of 2.5 bars. The growth stage of the potatoes was dry seed (BBCH 00).

**Table 1 - % Efficacy (Southern Europe)**

| **A.I.** | **Weed** | **Application rate (gr a.i/ha)** | **% control observed** |
|---|---|---|---|
| Diflufenican 500 SC | ***Chenopodium** sp. + Chenopodium album* | 62.5 | 84.40 |
| Metribuzin 700 WG | | 252 | 86.20 |
| Diflufenican + Metribuzin SC 62.5+250 g a.i/ha | | 62.59+250 | 99.20 |
| | | 50+200 | 96.60 |
| Diflufenican 500 SC | *Polygonum convolvulus* | 62.5 | 84.20 |
| Metribuzin 700 WG | | 252 | 75.90 |
| Diflufenican + Metribuzin SC 62.5+250 g a.i/ha | | 62.59+250 | 96.10 |
| | | 50+200 | 89.20 |
| Diflufenican 500 SC | *Persicaria lapathifolia* | 62.5 | 70.00 |
| Metribuzin 700 WG | | 252 | 83.30 |
| Diflufenican + Metribuzin SC 62.5+250 g a.i/ha | | 62.59+250 | 96.70 |
| | | 50+200 | 98.30 |
| Diflufenican 500 SC | *Beta vulgaris* | 62.5 | 61.80 |
| Metribuzin 700 WG | | 252 | 87.90 |
| Diflufenican + Metribuzin SC 62.5+250 g a.i/ha | | 62.59+250 | 89.60 |
| | | 50+200 | 95.30 |
| Diflufenican 500 SC | *Matricaria recutita* | 62.5 | 95.50 |
| Metribuzin 700 WG | | 252 | 98.00 |
| Diflufenican + Metribuzin SC 62.5+250 g a.i/ha | | 62.59+250 | 99.50 |
| | | 50+200 | 99.50 |
| Diflufenican 500 SC | *Solanum nigrum* | 62.5 | 75.80 |
| Metribuzin 700 WG | | 252 | 78.50 |
| Diflufenican + Metribuzin SC 62.5+250 g a.i/ha | | 62.59+250 | 81.10 |
| | | 50+200 | 81.10 |
| Diflufenican 500 SC | *Abutilon theophrasti* | 62.5 | 46.70 |
| Metribuzin 700 WG | | 252 | 96.00 |
| Diflufenican + Metribuzin SC 62.5+250 g a.i/ha | | 62.59+250 | 100.00 |
| | | 50+200 | 96.00 |
| Diflufenican 500 SC | Total dicotyledonous weeds | 62.5 | 82.00 |
| Metribuzin 700 WG | | 252 | 53.00 |
| Diflufenican + Metribuzin SC 62.5+250 g a.i/ha | | 62.59+250 | 91.70 |
| | | 50+200 | 91.7 |

**Table 2 - % Efficacy (Central Europe)**

| **A.I.** | **Weed** | **Application (gr a.i/ha)** | **% control observed** |
|---|---|---|---|
| Diflufenican 500 SC | *Alopecurus myosuroides* | 95 | 11.00 |
| Metribuzin 700 WG | | 540 | 61.00 |
| Diflufenican + Metribuzin SC 62.5+250 g a.i/ha | | 93.75+375 | 80.00 |
| | | 50+200 | 63.00 |
| Diflufenican 500 SC | *Echinochloa crusgalli* | 95 | 22.00 |
| Metribuzin 700 WG | | 540 | 71.00 |
| Diflufenican + Metribuzin SC 62.5+250 g a.i/ha | | 93.75+375 | 86.00 |
| | | 50+200 | 32.00 |
| Diflufenican 500 SC | *Polygonum spp.* | 95 | 61.00 |
| Metribuzin 700 WG | | 540 | 84.00 |
| Diflufenican + Metribuzin SC 62.5+250 g a.i/ha | | 93.75+375 | 92.00 |
| | | 50+200 | 66.00 |
| Diflufenican 500 SC | *Fallopia convolvulus* | 95 | 80.00 |
| Metribuzin 700 WG | | 540 | 77.00 |
| Diflufenican + Metribuzin SC 62.5+250 g a.i/ha | | 93.75+375 | 90.00 |
| | | 50+200 | 69.00 |
| Diflufenican 500 SC | *Veronica hederifolia* | 95 | 85.00 |
| Metribuzin 700 WG | | 540 | 54.50 |
| Diflufenican + Metribuzin SC 62.5+250 g a.i/ha | | 93.75+375 | 100.00 |
| | | 50+200 | 96.80 |
| Diflufenican 500 SC | *Galium aparine* | 95 | 81.00 |
| Metribuzin 700 WG | | 540 | 43.00 |
| Diflufenican + Metribuzin SC 62.5+250 g a.i/ha | | 93.75+375 | 91.00 |
| | | 50+200 | 72 |
| Diflufenican 500 SC | *Senecio vulgaris* | 95 | 77.00 |
| Metribuzin 700 WG | | 540 | 67.00 |
| Diflufenican + Metribuzin SC 62.5+250 g a.i/ha | | 93.75+375 | 99.00 |
| | | 50+200 | 48.00 |
| Diflufenican 500 SC | *Polygonum aviculare* | 95 | 67.50 |
| Metribuzin 700 WG | | 540 | 99.50 |
| Diflufenican + Metribuzin SC 62.5+250 g a.i/ha | | 93.75+375 | 100.00 |
| | | 50+200 | 99.5 |
| Diflufenican 500 SC | *Geranium dissectum* | 95 | 100.00 |
| Metribuzin 700 WG | | 540 | 50.00 |
| Diflufenican + Metribuzin SC 62.5+250 g a.i/ha | | 93.75+375 | 100.00 |
| | | 50+200 | 61 |
| Diflufenican 500 SC | *Lamium purpureum* | 95 | 91.00 |
| Metribuzin 700 WG | | 540 | 83.00 |
| Diflufenican + Metribuzin SC 62.5+250 g a.i/ha | | 93.75+375 | 96.00 |
| | | 50+200 | 99 |
| Diflufenican 500 SC | *Amaranthus retroflexus* | 95 | 90.00 |
| Metribuzin 700 WG | | 540 | 66.00 |
| Diflufenican + Metribuzin SC 62.5+250 g a.i/ha | | 93.75+375 | 90.00 |
| | | 50+200 | 51 |
| Diflufenican 500 SC | *Chenopodium Album* | 95 | 85.00 |
| Metribuzin 700 WG | | 540 | 93.00 |
| Diflufenican + Metribuzin SC 62.5+250 g a.i/ha | | 93.75+375 | 97.50 |
| | | 50+200 | 90 |

**Table 3 - % Efficacy**

| Weed | % weed control at 25-71DAA (rows covered) | | |
|---|---|---|---|
| | Diflufenican + Metribuzin SC 62.5+250 g a.i/ha | Metribuzin 700 WG | Diflufenican 500 SC |
| | 75+300 g/ha (1.2 L/ha) | 300 g/ha (1.2 L/ha) | 75 (1.2 L/ha) |
| *Chenopodium album* | 97.8 | 88.5 | 83.9 |
| *Cirsium arvense* | 82.5 | 75.0 | 75.0 |
| *Convolvulus arvensis* | 87.5 | 73.8 | 56.3 |
| *Polygonum* spp. | 91.7 | 81.4 | 81.9 |
| *Echinochloa crusgalli* | 83.0 | 67.5 | 52.3 |
| *Fumaria officinalis* | 91.6 | 89.5 | 83.5 |
| *Lamium purpureum* | 100.0 | 85.0 | 99.9 |
| *Senecio vulgaris* | 100.0 | 87.5 | 75.0 |
| *Solanum nigrum* | 68.8 | 51.9 | 49.4 |
| *Veronica hederifolia*/*Veronica persica* | 100.0 | 92.2 | 96.1 |
| *Mercurialis annua* | 100.0 | 97.0 | 76.0 |
| *Thlaspi arvese* | 98.3 | 92.8 | 96.2 |
| *Galeopsis sp.*/*Galeopsis intermedia* | 84.5 | 79.5 | 80.8 |
| *Galium aparine* | 88.5 | 53.0 | 76.9 |
| *Viola arevensis* | 98.9 | 95.6 | 95.6 |
| *Amaranthus retroflexus* | 95.0 | 73.8 | 83.8 |
| *Geranium dissectum* | 92.5 | 71.3 | 91.2 |
| *Stellaria media* | 99.9 | 96.1 | 96.3 |
| *Matricaria* spp. | 98.3 | 87.4 | 92.7 |
| *Anthusa arvensis* | 90.9 | 89.5 | 87.7 |
| All | 92.1 | 83.0 | 85.0 |

As can been seen in Tables 1-3, the formulation comprising the combination of diflufenican and metribuzin provided better results with respect to the efficacy of the herbicides when compared with diflufenican and metribuzin individually. It should be noted, that from the above table it can be seen that the formulation of diflufenican and metribuzin provides control on a broader spectrum of weeds. In other words, the formulation provides control of weeds that are not controlled by at least one of diflufenican and metribuzin individually. Further, the formulation may be applied at lower rates while providing the same amount of control than the recommended rates of diflufenican and metribuzin. Although only a small number of weeds are shown in the above tables, it can be appreciated that similar efficacy results may be obtained when the formulation comprising diflufenican and metribuzin is applied to different weeds.

**Table 4: Potato yield**

| **Notation (size of tubers)** | **Unit** | **Untreated** | **Diflufenican+ Metribuzin (62.5 g a.i/ha** + **250 g a.i/ha)** | | **Metribuzin (700 g a.i/ha)** | |
|---|---|---|---|---|---|---|
| | | | **1.2 L/ha** | **2.4 L/ha** | **0.75 kg/ha** | **1.5 kg/ha** |
| **≤ 40 mm** | ton/ha | 1.3 | 1.3 | 1.2 | 1.4 | 1.1 |
| **40 mm** ≤ **c** ≤ **50 mm** | ton/ha | 4.5 | 5.2 | 4.9 | 5.0 | 4.5 |
| **50 mm** ≤ **c** ≤ **60 mm** | ton/ha | 8.8 | 9.1 | 8.8 | 8.3 | 8.6 |
| **60 mm** ≤ **c** ≤ **75 mm** | ton/ha | 28.5 | 29.4 | 29.9 | 29.2 | 29.4 |
| ≥ **75 mm** | ton/ha | 2.7 | 2.0 | 2.0 | 2.8 | 3.0 |

As shown in Table 3, application of the formulation of diflufenican and metribuzin had an overall positive effect indicating larger yield of potato tubers when compared to the untreated crop and to the crop treated with metribuzin. Application of the formulation of diflufenican and metribuzin caused initial intermediate damage, but the plants recovered almost completely at the end of the trials. When compared to crops administrated with 0.75 kg/ha of metribuzin (525 g a.i/ha), crops administrated with 1.2 L/ha (375 g a.i/ha) of the combination formulation had an overall better yield. When compared to the crops administrated with 1.5 kg/ha (1050 g a.i/ha) of metribuzin, crops administrated with 2.4 L/ha (750 g a.i/ha) of the combination formulation had an overall better yield. It should be noted that the amount of herbicidally active compounds in the combination formulation is significantly less than the amount of herbicidally active components in the formulation of metribuzin.

## Claims

1. Use of a herbicidally active combination comprising, as the only crop protection agents and/or herbicides, diflufenican and metribuzin or an ester or salt of any of the foregoing, or a combination thereof, for controlling unwanted vegetation in a crop of potatoes.

2. Use of the combination according to claim 1, wherein the combination is applied to a locus of unwanted vegetation.

3. The use according to claim 1 or 2, wherein the ratio by weight of diflufenican to metribuzin is from 1:10 to 10:1.

4. The use according to claim 3, wherein the ratio by weight of diflufenican to metribuzin is from 1:4 to 4:1.

5. The use according to any one of claims 1 to 4, wherein the application rates of the combination of diflufenican and metribuzin are from 1 g/ha to 1000 g/ha.

6. The use according to claim 5, wherein the application rates of the combination of diflufenican and metribuzin are from 250 g/ha to 500 g/ha.

7. The use according to any one of claims 1 to 6, wherein the diflufenican and metribuzin are applied jointly or in a succession.

8. A method of reducing the total amount of herbicidally active compounds necessary for controlling unwanted vegetation in a crop of potatoes, comprising: a) applying metribuzin or an ester or salt or a combination thereof at an application rate from 25% to 75% of a recommended application rate of from 350 to 525 g/ha; and b) applying diflufenican or an ester or salt or a combination thereof, wherein said metribuzin or an ester or salt or a combination thereof and said diflufenican or an ester or salt or a combination thereof are the only crop protection agents and/or herbicides used for said controlling.

9. The method according to claim 8, wherein the ratio by weight of diflufenican to metribuzin is from 1:10 to 10:1.

10. The method according to claim 9, wherein the ratio by weight of diflufenican to metribuzin is from 1:4 to 4:1.

11. The method according to any one of claims 8 to 10, wherein the application rates of the combination of diflufenican and metribuzin are from 1 g/ha to 1000 g/ha.

12. The method according to claim 11, wherein the application rates of the combination is from 250 g/ha to 500 g/ha.

13. The method according to claim 12, wherein the application rate of metribuzin is from 200 g/ha to 400 g/ha and the application of diflufenican is from 50 g/ha to 100 g/ha.

14. The method according to any one of claims 8 to 13, wherein the diflufenican and metribuzin are applied jointly or in a succession.

## Patentansprüche

1. Verwendung einer herbizid wirksamen Kombination umfassend, als einzige Pflanzenschutzmittel und/oder Herbizide, Diflufenican und Metribuzin oder ein Ester oder Salz eines der Vorhergehenden, oder eine Kombination davon, zur Bekämpfung von unerwünschter Vegetation in einer Kartoffelkultur.

2. Verwendung der Kombination nach Anspruch 1, wobei die Kombination auf einen Ort unerwünschter Vegetation angewendet wird.

3. Die Verwendung nach Anspruch 1 oder 2, wobei das Gewichtsverhältnis von Diflufenican zu Metribuzin von 1:10 bis 10:1 reicht.

4. Die Verwendung nach Anspruch 3, wobei das Gewichtsverhältnis von Diflufenican zu Metribuzin von 1:4 bis 4:1 reicht.

5. Die Verwendung nach einem der Ansprüche 1 bis 4, wobei die Anwendungsmengen der Kombination von Diflufenican und Metribuzin von 1 g/ha bis 1000 g/ha reichen.

6. Die Verwendung nach Anspruch 5, wobei die Anwendungsmengen der Kombination von Diflufenican und Metribuzin von 250 g/ha bis 500 g/ha reichen.

7. Die Verwendung nach einem der Ansprüche 1 bis 6, wobei das Diflufenican und das Metribuzin gemeinsam oder nacheinander angewendet werden.

8. Ein Verfahren zur Verringerung der Gesamtmenge an herbizid wirksamen Verbindungen, die zur Bekämpfung von unerwünschter Vegetation in einer Kartoffelkultur erforderlich sind, umfassend: a) Anwenden von Metribuzin oder einem Ester oder Salz oder einer Kombination davon bei einer Anwendungsmenge von 25 % bis 75 % von einer empfohlenen Anwendungsmenge von 350 bis 525 g/ha; und b) Anwenden von Diflufenican oder einem Ester oder Salz oder einer Kombination davon, wobei das Metribuzin oder ein Ester oder Salz oder eine Kombination davon und das Diflufenican oder ein Ester oder Salz oder eine Kombination davon die einzigen zur Bekämpfung verwendeten Pflanzenschutzmittel und/oder Herbizide sind.

9. Das Verfahren nach Anspruch 8, wobei das Gewichtsverhältnis von Diflufenican zu Metribuzin von 1:10 bis 10:1 reicht.

10. Das Verfahren nach Anspruch 9, wobei das Gewichtsverhältnis von Diflufenican zu Metribuzin von 1:4 bis 4:1 reicht.

11. Das Verfahren nach einem der Ansprüche 8 bis 10, wobei die Anwendungsmengen der Kombination von Diflufenican und Metribuzin von 1 g/ha bis 1000 g/ha reichen.

12. Das Verfahren nach Anspruch 11, wobei die Anwendungsmengen der Kombination von 250 g/ha bis 500 g/ha reicht.

13. Das Verfahren nach Anspruch 12, wobei die Anwendungsmenge von Metribuzin von 200 g/ha bis 400 g/ha reicht und die Anwendung von Diflufenican von 50 g/ha bis 100 g/ha reicht.

14. Das Verfahren nach einem der Ansprüche 8 bis 13, wobei das Diflufenican und das Metribuzin gemeinsam oder nacheinander angewendet werden.

## Revendications

1. Utilisation d'une combinaison herbicide active comprenant, comme les seuls agents de protection des cultures et/ou herbicides, du diflufénican et de la métribuzine ou un ester ou sel de l'un quelconque des précédents, ou une combinaison de ceux-ci, pour le contrôle de la végétation indésirable dans une culture de pommes de terre.

2. Utilisation de la combinaison selon la revendication 1, dans laquelle la combinaison est appliquée à un lieu de végétation indésirable.

3. L'utilisation selon la revendication 1 ou 2, dans laquelle le rapport de poids du diflufénican à la métribuzine est de 1 : 10 à 10 : 1.

4. L'utilisation selon la revendication 3, dans laquelle le rapport de poids du diflufénican à la métribuzine est de 1 : 4 à 4 : 1.

5. L'utilisation selon l'une quelconque des revendications 1 à 4, dans laquelle les taux d'application de la combinaison de diflufénican et de métribuzine sont de 1 g/ha à 1000 g/ha.

6. L'utilisation selon la revendication 5, dans laquelle les taux d'application de la combinaison de diflufénican et de métribuzine sont de 250 g/ha à 500 g/ha.

7. L'utilisation selon l'une quelconque des revendications 1 à 6, dans laquelle le diflufénican et la métribuzine sont appliqués conjointement ou successivement.

8. Un procédé de réduction de la quantité totale de composés herbicides actifs nécessaires pour le contrôle de la végétation indésirable dans une culture de pommes de terre, comprenant : a) l'application de métribuzine ou d'un ester ou sel ou d'une combinaison de ceux-ci à un taux d'application de 25 % à 75 % d'un taux d'application recommandé de 350 à 525 g/ha ; et b) l'application de diflufénican ou d'un ester ou sel ou d'une combinaison de ceux-ci, dans lequel ladite métribuzine ou un ester ou un sel ou une combinaison de ceux-ci et ledit diflufénican ou un ester ou un sel ou une combinaison de ceux-ci sont les seuls agents de protection des cultures et/ou herbicides utilisés pour ledit contrôle.

9. Le procédé selon la revendication 8, dans lequel le rapport de poids du diflufénican à la métribuzine est de 1 : 10 à 10 : 1.

10. Le procédé selon la revendication 9, dans lequel le rapport de poids du diflufénican à la métribuzine est de 1 : 4 à 4 : 1.

11. Le procédé selon l'une quelconque des revendications 8 à 10, dans lequel les taux d'application de la combinaison de diflufénican et de métribuzine sont de 1 g/ha à 1000 g/ha.

12. Le procédé selon la revendication 11, dans lequel les taux d'application de la combinaison est de 250 g/ha à 500 g/ha.

13. Le procédé selon la revendication 12, dans lequel le taux d'application de métribuzine est de 200 g/ha à 400 g/ha et l'application de diflufénican est de 50 g/ha à 100 g/ha.

14. Le procédé selon l'une quelconque des revendications 8 à 13, dans lequel le diflufénican et la métribuzine sont appliqués conjointement ou successivement.
